# EUROPEAN PATENT APPLICATION

(11) **EP 2 251 716 A1**
(43) Date of publication of application: **17.11.2010**
(21) Application number: 10160855.2
(22) Date of filing: 23.04.2010
(51) Int. Cl.: G02B 3/00, G02B 13/00, B29D 11/00

(54) **Manufacturing method and manufacturing apparatus of shaped article**

(30) Priority: 14.05.2009 JP 2009117588
(71) Applicant: Fujinon Corporation, Saitama-shi, Saitama (JP); Fujifilm Corporation, Minato-ku Tokyo (JP)
(72) Inventor: Yamada, Daisuke, Saitama (JP); Nakao, Kazuhiro, Saitama (JP)
(74) Representative: Klunker . Schmitt-Nilson . Hirsch

(57) **Abstract**

Disclosed are a method and an apparatus capable of accurately forming each lens section of a shaped article having a plurality of lens sections which are one-dimensionally or two-dimensionally arranged and are made of a resin material.

A wafer level lens array (100) includes a plurality of lens sections (101) arranged one-dimensionally or two-dimensionally and a substrate section (102) connecting the lens sections (101). The lens sections (101) and the substrate section (102) are integrally made of a resin material. The resin material is cured between a transfer surface (112) of a first mold (111), which is fit to one side surface of the wafer level lens array (100), and a transfer surface (114) of a second mold (113) which is fit to an opposite side surface of the wafer level lens array (100). A space between the transfer surface (112) of the first mold (111) and the transfer surface (114) of the second mold (113) is narrowed in accordance with contraction of the resin material caused by the curing, and the transfer surface (112) of the first mold (111) and the transfer surface (114) of the second mold (113) are kept in tight contact with the resin material.

## Description

### BACKGROUND OF THE INVENTION

### 1. Field of the Invention

The present invention relates to a manufacturing method and a manufacturing apparatus of a shaped article having a plurality of lens sections which is one-dimensionally or two-dimensionally arranged and is made of a resin material.

### 2. Description of the Related Art

In recent years, portable terminals of electronic devices such as cellular phones and PDAs (Personal Digital Assistant) are equipped with image pickup units which have small and thin shapes. Such image pickup units generally include a solid-state image pickup device such as a CCD (Charge Coupled Device) image sensor or a CMOS (Complementary Metal-Oxide Semiconductor) image sensor and lenses that form an image on the solid-state image pickup device.

As portable terminals become smaller and thinner and portable terminals spread, the image pickup units mounted on those are also further required to achieve reductions in size and thickness and increases in productivity. In order to comply with the requirements, the following known method of mass-producing image pickup units may be adopted. First, a sensor array is integrally assembled with one lens array or is integrally assembled with a plurality of lens arrays in an overlapped manner. The sensor array includes a plurality of solid-state image pickup devices which is arranged one-dimensionally or two-dimensionally and a substrate section which holds the solid-state image pickup devices. The lens array includes a plurality of lens sections which is arranged one-dimensionally or two-dimensionally in the same manner and a substrate section which holds the lenses. Subsequently, the substrate section of the lens array and the substrate section of the sensor array are cut so as to include the lens sections and solid-state image pickup devices, respectively. Hereinafter, each lens section held by the substrate section is referred to as a wafer level lens, and a group of the lens sections is referred to as a wafer level lens array.

There is a known wafer level lens or a known wafer level lens array in which a lens section made of a resin material are formed on a substrate section made of a glass (for example, refer to Japanese Patent No. 3926380 and International Publication No. 08/102648). There is also a known wafer level lens or a known wafer level lens array in which a plurality of lens sections and a substrate section connecting the lens sections to each other are integrally made of a resin material (for example, refer to International Publication No. 08/093516). In all the lenses or the lens arrays mentioned above, the lens section is made of the resin material by using a mold, but the resin material contracts in the process of curing of the resin material. When the resin material contracts, the shape of the transfer surface of the mold is not accurately transferred to the resin material. Thus, there is a concern about deterioration in optical characteristics of the lens section made of the resin material.

### SUMMARY OF THE INVENTION

The invention has been made in view of the above-mentioned situations, and it is desirable to accurately form each lens section of a shaped article having a plurality of lens sections which are one-dimensionally or two-dimensionally arranged and are made of a resin material.
1. According to a first aspect of the invention, there is provided a method of manufacturing a shaped article having a plurality of lens sections arranged one-dimensionally or two-dimensionally and a substrate section connecting the lens sections, the lens sections and the substrate section being integrally made of a resin material. The resin material is cured between a transfer surface of a first mold, which is fit to one side surface of the shaped article, and a transfer surface of a second mold which is fit to an opposite side surface of the shaped article. A space between the transfer surface of the first mold and the transfer surface of the second mold is narrowed in accordance with contraction of the resin material caused by curing, and the transfer surface of the first mold and the transfer surface of the second mold are kept in tight contact with the resin material.
2. According to a second aspect of the invention, there is provided a method of manufacturing the shaped article having a substrate section and a plurality of lens sections arranged one-dimensionally or two-dimensionally on a surface of the substrate section, the lens section being made of a resin material. The resin material is cured between a transfer surface of a mold, which is fit to a surface of the lens section, and the surface of the substrate section. A space between the transfer surface of the mold and the surface of the substrate section is narrowed in accordance with contraction of the resin material caused by the curing, and the transfer surface of the mold and the resin material are kept in tight contact with each other.
3. According to a third aspect of the invention, there is provided an apparatus for manufacturing a shaped article having a plurality of lens sections arranged one-dimensionally or two-dimensionally and a substrate section connecting the lens sections, the lens sections and the substrate section being integrally made of a resin material. The apparatus includes: a first mold that has a transfer surface fit to one side surface of the shaped article; a second mold that has a transfer surface fit to the opposite side surface of the shaped article; a mechanical section that relatively moves the first mold and the second mold so as to narrow a space between the transfer surface of the first mold and the transfer surface of the second mold; and a control section that drives the mechanical section in accordance with contraction of the resin material caused by the curing of the resin material cured between the transfer surface of the first mold and the transfer surface of the second mold.
4. According to a fourth aspect of the invention, there is provided an apparatus for manufacturing the shaped article having a substrate section and a plurality of lens sections arranged one-dimensionally or two-dimensionally on the substrate section, the lens section being made of a resin material. The apparatus includes: a mold that has a transfer surface fit to a surface of the lens section and is disposed so as to face the transfer surface to the surface of the substrate section; a mechanical section that relatively moves the mold so as to narrow a space between the transfer surface of the mold and the surface of the substrate section; and a control section that drives the mechanical section in accordance with contraction of the resin material caused by the curing of the resin material cured between the transfer surface of the mold and the surface of the substrate section.

According to the aspects of the invention, in spite of the contraction of the resin material caused by the curing, the transfer surface of the mold and the resin material are kept in tight contact with each other, and the shape of the transfer surface of the mold is accurately transferred. As a result, it is possible to form the lens sections made of the resin material accurately.

### BRIEF DESCRIPTION OF THE DRAWINGS

Figs. 1A and 1B are views illustrating an example of a shaped article according to an embodiment of the invention, where Fig. 1A is a top plan view of the shaped article and Fig. 1B is a sectional view of the shaped article taken along the line B-B in Fig. 1A;
Figs. 2A to 2F are sectional views illustrating modified examples of the shaped article of Figs. 1A and 1B;
Fig. 3 is a front view illustrating a schematic configuration of a manufacturing apparatus of the shaped article of Figs. 1A and 1B;
Figs. 4A to 4D are views illustrating a frame format of a process of manufacturing the shaped article using the manufacturing apparatus of Fig. 3;
Fig. 5 is a graph illustrating the general relationship between time and viscosity (hardness) of a resin material;
Figs. 6A and 6B are views illustrating a modified example of the shaped article of Figs. 1A and 1B, where Fig. 6A is a top plan view of the shaped article and Fig. 6B is a sectional view of the shaped article taken along the line B-B in Fig. 6A;
Fig. 7 is a front view illustrating a schematic configuration of a manufacturing apparatus of the shaped article of Figs. 6A and 6B;
Figs. 8A to 8D are views illustrating a frame format of a process of manufacturing the shaped article using the manufacturing apparatus of Fig. 7;
Figs. 9A and 9B are views illustrating an example of a shaped article according to another embodiment of the invention, where Fig. 9A is a top plan view of the shaped article and Fig. 9B is a sectional view of the shaped article taken along the line B-B in Fig. 9A;
Fig. 10 is a front view illustrating a schematic configuration of a manufacturing apparatus of the shaped article of Fig. 9; and
Figs. 11A to 11D are views illustrating a frame format of a process of manufacturing the shaped article using the manufacturing apparatus of Fig. 10.

### DESCRIPTION OF THE PREFERRED EMBODIMENTS

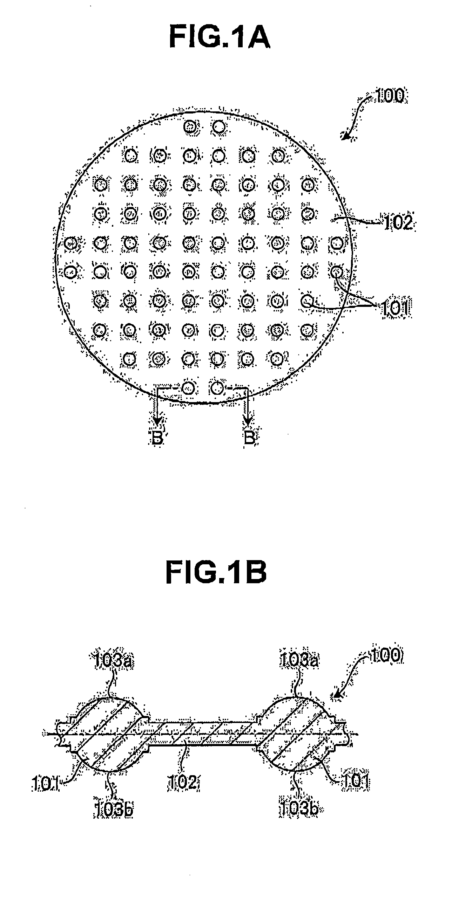

Figs. 1A and 1B show a wafer level lens array as an example of a shaped article having a plurality of lens sections which is one-dimensionally or two-dimensionally arranged and are made of a resin material. The wafer level lens array 100 shown in Figs. 1A and 1B includes a plurality of lens sections 101 which is two-dimensionally arranged at a predetermined pitch and a substrate section 102 which has a substantially circular shape connecting the lens sections 101 to each other.

The lens sections 101 and the substrate section 102 are integrally made of an optically transparent resin material. As the resin material of the lens sections 101 and the substrate section 102, for example, a thermosetting epoxy resin, a thermosetting acryl resin, a photo-curable epoxy resin, a photo-curable acryl resin, or the like is used.

Further, it may be possible to use an organic inorganic hybrid material formed by distributing inorganic microparticles in the above-mentioned resin. As inorganic microparticles, for example, there are oxide microparticles, sulfide microparticles, selenide microparticles, and telluride microparticles. More specifically, for example, there are microparticles of zirconium oxide, titan oxide, zinc oxide, tin oxide, zinc sulfide, and the like.

The inorganic microparticles may be used alone, and may be used by combining two or more kinds thereof. Further, the inorganic microparticles may be compounds formed of a plurality of components. In addition, for the various purposes of reducing photocatalytic activity, reducing a absorption rate, and so on, the inorganic microparticles may be coated with a different metal, whose surface layers may be coated with a different metal oxide such as silica and alumina, and whose surfaces may in turn be modified by a silane coupling agent, a titanate coupling agent, dispersive agents, which have an organic acid (carboxylic acids, sulfone acids, phosphoric acids, phosphoric acids, and the like) or an organic acid group, and the like.

In a case where the number average particle size of the inorganic microparticles is too small, the material characteristics may change. Further, in a case where the difference in refractive indices between the resin matrix and the inorganic microparticles is too large, Rayleigh scattering has a remarkable influence. Hence, the size is preferably in the range of 1 nm to 15 nm, more preferably in the range of 2 nm to 10 nm, and particularly preferably in the range of 3 nm to 7 nm. Further, it is more preferable that the particle size distribution of the inorganic particles should be denser. The method of defining such monodisperse particles is various, but for example, the numerical value range as prescribed in JP-A-2006-160992 satisfies the preferable particle size distribution range. Here, the above-mentioned number average first order particle size can be measured by the X-ray diffractometer (XRD), the transmission-type electron microscope (TEM), or the like.

The refractive index of the micro particles at 22°C and at a wavelength of 589 nm is preferably in the range of 1.90 to 3.00, more preferably in the range of 1.90 to 2.70, and particularly preferably in the range of 2.00 to 2.70. The content of the micro particles relative to the resin matrix is, in view of transparency and an increase in refractive index, preferably 5 weight% or more, more preferably in the range of 10 to 70 weight%, and particularly preferably in the range of 30 to 60 weight%.

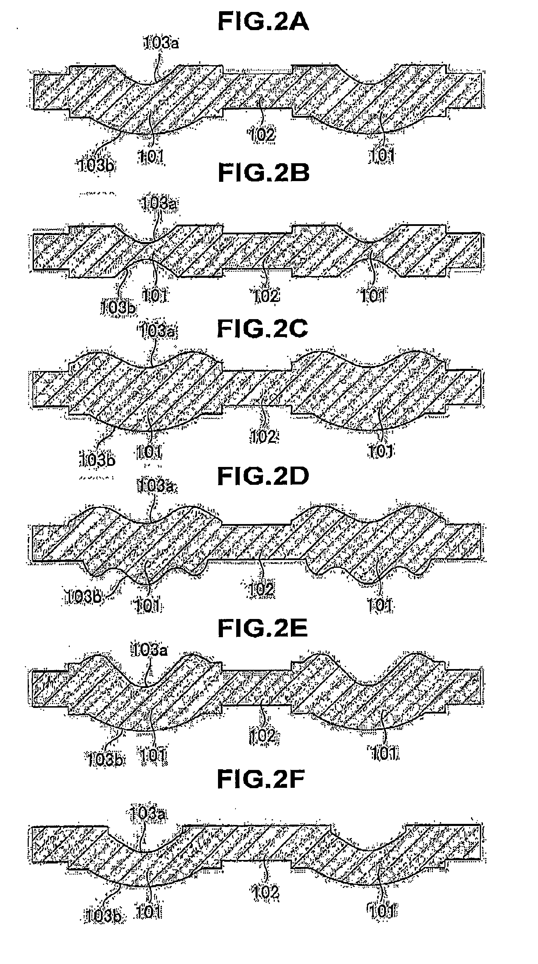

Each lens section 101 is configured so that predetermined lens surfaces 103a and 103b are formed on both sides thereof, and in the example shown in the drawing, all the surfaces are formed as convex spherical surfaces. Furthermore, the lens surfaces 103a and 103b are not limited to the convex spherical surfaces, and may be concave spherical surfaces, aspheric surfaces, or various combinations of the convex spherical surface, the concave spherical surface, and the aspheric surface. Fig. 2A to 2F show other examples of the lens section 101.

The lens section 101 of the modified example shown in Fig. 2A is configured so that the one side lens surface 103a is concave and the opposite side lens surface 103b is convex. The lens section 101 of the modified example shown in Fig. 2B is configured so that all the lens surfaces 103a and 103b are concave.

The lens section 101 of the modified example shown in Fig. 2C is configured so that the one side lens surface 103a has convex and concave portions and the opposite side lens surface 103b is convex. The lens section 101 of the modified example shown in Fig. 2D is configured so that all the lens surfaces 103a and 103b have convex and concave portions.

The lens section 101 of the modified example shown in Fig. 2E is configured so that the one side lens surface 103a has convex and concave portions and the bottom of the concave portion is located inside the substrate section 102 in the thickness direction. In addition, the opposite side lens surface 103b is convex.

The lens section 101 of the modified example shown in Fig. 2F is configured so that the one side lens surface 103a is concave and the entirety of the surface is located inside the substrate section 102 in the thickness direction. In addition, the opposite side lens surface 103b is convex.

Since the lens section 101 and the substrate section 102 are integrally made of the resin material, it is possible to employ a lens shape in which a part of the one side lens surface 103a of the lens section 101 is depressed in the substrate section 102 in the thickness direction as shown in Fig. 2E. Alternatively, it is possible to employ a lens shape in which the entirety of the one side lens surface 103a of the lens section 101 is depressed in the substrate section 102 in the thickness direction as shown in Fig. 2F. As a result, the degree of freedom in lens design increases.

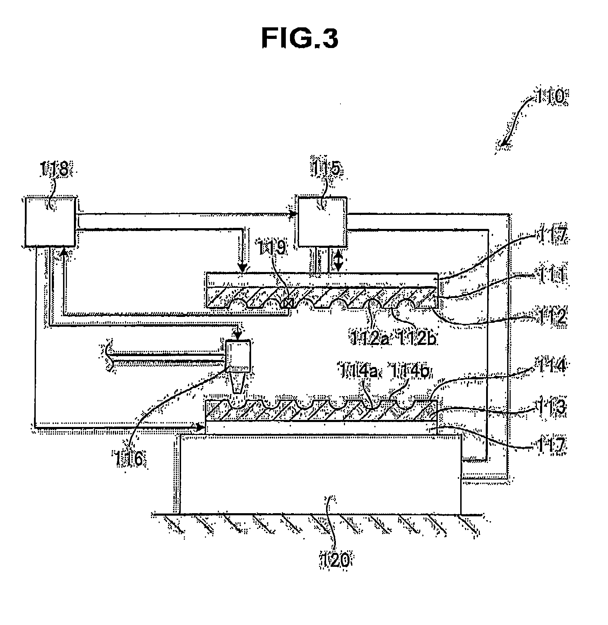

Fig. 3 shows an example of the manufacturing apparatus for manufacturing the above-mentioned wafer level lens array 100. Furthermore, the following description will be given under the assumption that a thermosetting resin is used as the resin material of the lens sections 101 and substrate section 102. The manufacturing apparatus 110 shown in Fig. 3 includes an upper mold 111, a lower mold 113, a mechanical section 115, a resin supply section 116, a heating section 117, and a control section 118.

The upper mold 111 has a transfer surface 112 fit to the upper surface of the wafer level lens array 100. The lens sections 101 of the wafer level lens array 100 shown in Figs. 1A and 1B are two-dimensionally arranged at a predetermined pitch, and the lens surfaces 103a of lens sections 101 included in the upper surface of the wafer level lens array 100 are convex spherical surfaces. Hence, on the transfer surface 112 of the upper mold 111, the concave spherical surfaces 112a having shapes opposite to the lens surfaces 103a are two-dimensionally arranged at a pitch the same as that of the lens sections 101. Likewise, the lower mold 113 has a transfer surface 114 fit to the lower surface of the wafer level lens array 100.

The upper mold 111 is provided with a pressure sensor 119 that detects the pressure which is applied to the transfer surface by the contact of the resin material. In the example shown in the drawing, the pressure sensor 119 is provided on a portion, in which the surface of the substrate section 102 of the wafer level lens array 100 is formed, on the transfer surface 112, that is, on a planar surface 112b except the concave spherical surfaces 112a arranged two-dimensionally. Furthermore, the contact between the transfer surface 112 and the resin material having fluidity ahead of curing uniforms the pressure applied to the transfer surface 112. Therefore, it is enough to provide just one pressure sensor 119, but it is preferable that a plurality of pressure sensors should be separately arranged on the transfer surface 112. Further, in the example shown in the drawing, the pressure sensor 119 is provided on the upper mold 111. However, the pressure sensor 119 may be provided on the lower mold 113, and may be provided on both of the upper mold 111 and the lower mold 113.

The upper mold 111 and the lower mold 113 are disposed so that the transfer surface 112 and 114 of those are opposed to each other. The lower mold 114 is mounted on a base mount 120 so that its position is fixed. The upper mold 111 is supported by the mechanical section 115. The mechanical section 115 is configured to raise the upper mold 111 so as to widen or narrow the space between the transfer surface 112 of the upper mold 111 and the transfer surface 114 of the lower mold 113. As the mechanism that raises the upper mold 111, it is possible to use an appropriate mechanism such as a ball screw and a cylinder piston.

The resin supply section 116 is configured to supply the resin material on the transfer surface 114 of the lower mold 113. Furthermore, in consideration of the contraction of the resin material caused by the curing thereof, the amount of the supplied resin material is set to be slightly larger than the volume of the wafer level lens array 100.

The heating section 117 is configured to heat the upper mold 111 and the lower mold 113 separately and supply the heat required for the curing to the resin material being in contact with the transfer surface 112 of the upper mold 111 and the transfer surface 114 of the lower mold 113. Accordingly, the upper mold 111 and the lower mold 113 are made of metal such as nickel having an excellent thermal conductivity.

The control section 118 is configured to raise the upper mold 111 by driving the mechanical section 115 in response to the pressure which is detected by the pressure sensor 119, and adjust the space between the transfer surface 112 of the upper mold 111 and the transfer surface 114 of the lower mold 113. Further, by controlling the operations of the resin supply section 116 and the heating section 117, the amount of the supplied resin material, the temperatures of the upper mold 111 and the lower mold 113, and the like are also adjusted.

A process of manufacturing the wafer level lens array 100 by using the manufacturing apparatus 110 configured as described above is described below.

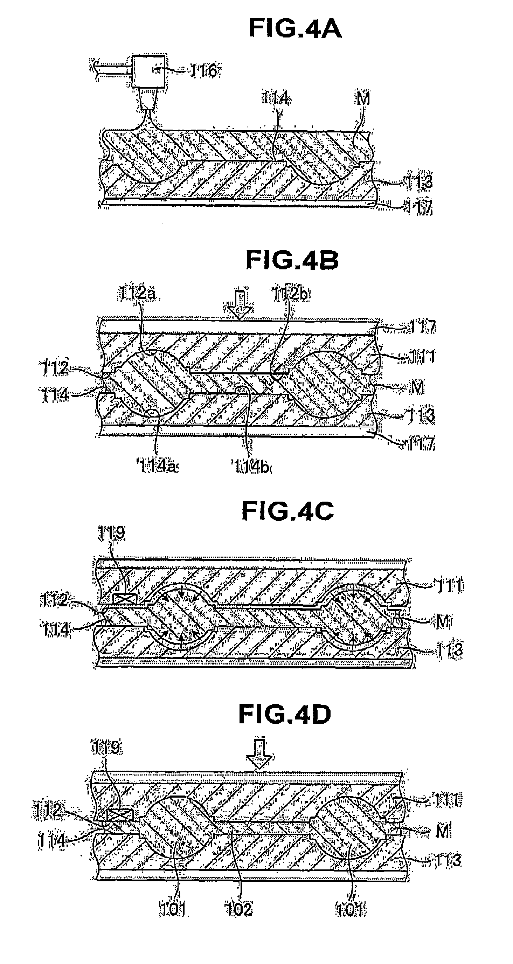

As shown in Fig. 4A, first, the resin supply section 116 supplies the resin material M to the transfer surface 114 of the lower mold 113, and the resin material M spreads widely over the transfer surface 114 of the lower mold 113. In a case where the fluidity of the resin material M is relatively low, the fluidity is increased by preheating the resin material M in the resin supply section 116, and in this state, the resin material M may be supplied onto the transfer surface 114 of the lower mold 113. In addition, the resin material M on the transfer surface 114 of the lower mold 113 is preheated by allowing the heating section 117 to heat the lower mold 113, and thereby the fluidity of the resin material M may be increased on the transfer surface 114 of the lower mold 113.

Thereafter, as shown in Fig. 4B, the resin material M is widely spread over the transfer surface 114 of the lower mold 113, and subsequently the resin supply section 116 is moved back from the upper side of the lower mold 113. Then, the upper mold 111 is lowered, and the resin material M is sandwiched between the transfer surface 112 of the upper mold 111 and the transfer surface 114 of the lower mold 113. The resin material M comes into tight contact with the transfer surface 112 of the upper mold 111 and the transfer surface 114 of the lower mold 113, and shapes of both transfer surfaces 112 and 114 is transferred to the resin material M.

Then, the heating section 117 separately heats the upper mold 111 and the lower mold 113, and supplies the heat to the resin material M being in contact with the transfer surface 112 of the upper mold 111 and the transfer surface 114 of the lower mold 113. Thereby, the resin material M is cured in a state where the shape of both transfer surfaces 112 and 114 are transferred. The resin material M, which is sandwiched between the concave spherical surfaces 112a and 114a of both transfer surfaces 112 and 114, forms the lens sections 101, which have the lens surfaces 103a and 103b as the convex spherical surfaces, on both sides thereof. In addition, the resin material M, which is sandwiched between the planar surfaces 112b and 114b except the concave spherical surfaces of both transfer surfaces 112 and 114, forms the substrate section 102 which connects the lens sections 101 to each other.

As shown in Fig. 4C, in the process of the curing of the resin material M, the resin material M contracts, the contractile force of the resin material M acts in the direction of separating the resin material M from the transfer surface 112 of the upper mold 111 and the transfer surface 114 of the lower mold 113 (in order to describe the direction of the action of the contractile force of the resin material M, Fig. 4C shows the state, in which both transfer surfaces 112 and 114 are separated from the resin material M, for convenience of description, but it is preferable that both transfer surfaces 112 and 114 should be kept in tight contact with the resin material M without the separation therebetween). Thereby, the pressure, which is applied by the contact of the resin material M to the transfer surface 112 of the upper mold 111 and the transfer surface 114 of the lower mold 113, is deteriorated. The fluctuating pressure is detected by the pressure sensor 119 provided on the transfer surface 112 of the upper mold 111, and the signal corresponding to the detected pressure is transmitted from the pressure sensor 119 to the control section 118.

The control section 118 stores a set pressure, which is set in advance, relative to the pressure applied to transfer surface 112 of the upper mold 111 in the process of the curing of the resin material M. The control section 118 lowers the upper mold 111 by driving the mechanical section 115 so as to allow the pressure sensor 119 to detect the stored set pressure on the basis of the signal transmitted by the pressure sensor 119. According thereto, as shown in Fig. 4D, it is possible to narrow the space between the transfer surface 112 of the upper mold 111 and the transfer surface 114 of the lower mold 113. In addition, the act is made to keep both transfer surfaces 112 and 114 in tight contact with the resin material M while changing the shape of the resin material M along both transfer surfaces 112 and 114. As described above, due to the contraction of the resin material M caused by the curing thereof, both transfer surfaces 112 and 114 are kept in tight contact with the resin material M, and the shapes of both transfer surfaces 112 and 114 is accurately transferred. As a result, the lens sections 101 made of the resin material M are formed with high accuracy.

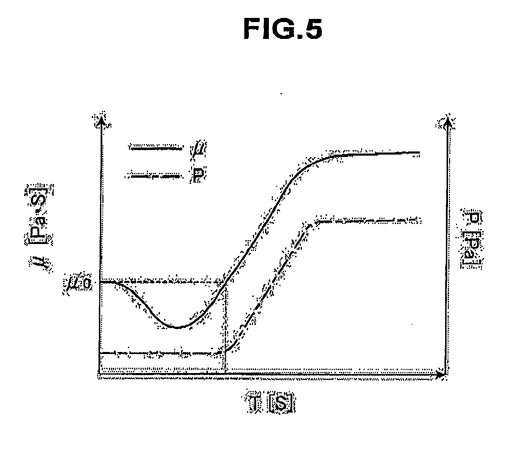

The set pressure, which is stored in the control section 118, may be set to a constant pressure in the process of the curing of the resin material M. The pressure in this case may be generated by driving the mechanical section 115, and may be generated by the weight of the upper mold 111 by itself. Preferably, the set pressure stored in the control section 118 is, as shown in Fig. 5, set to increase as the resin material M becomes harder. Fig. 5 shows a general relationship between time T and viscosity (hardness) µ of the resin material. Furthermore, the time T corresponds to the amount of accumulated energy applied to the resin material. Besides, Fig. 5 shows the shift of the set pressure P, that is, the shift of the pressure added to the resin material.

As shown in Fig. 5, the viscosity of the resin material M is decreased by the preheating, and subsequently the viscosity is increased as the curing reaction proceeds. The set pressure gradually becomes higher in accordance with the increase in viscosity of the preheated resin material. As described above, as the resin material M becomes harder, the set pressure is set to increase, and thus it is possible to accurately transfer the shapes of the transfer surface 112 of the upper mold 111 and the transfer surface 114 of the lower mold 113 to the resin material M which is gradually cured. Furthermore, in the example shown in the drawing, until the viscosity decreased by preheating returns to the viscosity µₒ at room temperature, the set pressure is set to be constant regardless of the increase in viscosity of the resin material M. This is for preventing the resin material M from leaking out from the gap between the upper mold 111 and the lower mold 113 by adding a relatively high pressure to the resin material M of which the viscosity is extremely low.

In the description of the above-mentioned example, the resin material M, which forms the lens sections 101 and the substrate section 102 of the wafer level lens array 100, is a thermosetting resin, but may be photo-curable resin. In this case, the manufacturing apparatus 100 is provided with a light source that irradiates light for advancing the curing reaction of the resin material onto the resin material. In the apparatus, at least one of the upper mold 111 and the lower mold 113 is made of a material such as glass which transmits light emitted from the light source.

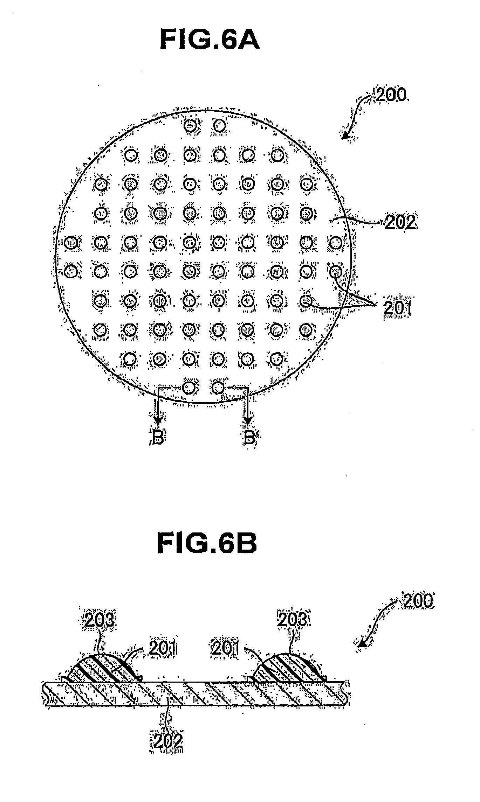

Figs. 6A and 6B show a modified example of the above-mentioned wafer level lens array 100. The wafer level lens array 200 shown in Figs. 6A and 6B includes a substrate section 202 and a plurality of lens sections 201 which is two-dimensionally arranged at a predetermined pitch on the surface of the substrate section 202.

The substrate section 202 is made of optical transparent ceramics referred to as transparent alumina, glass, or the like. The lens section 201 is made of a transparent resin material, and is bonded to the surface of the substrate section 202. As the resin material of the lens sections 201, for example, a thermosetting epoxy resin, a thermosetting acryl resin, a photo-curable epoxy resin, a photo-curable acryl resin, or the like may be used.

Each lens section 201 is configured to have a predetermined lens surface 203 formed thereon, and in the example shown in the drawing, the lens surface 203 is formed as a convex spherical surface. Furthermore, the lens surface 203 is not limited to the convex spherical surface, and may be a concave spherical surface, or aspheric surface.

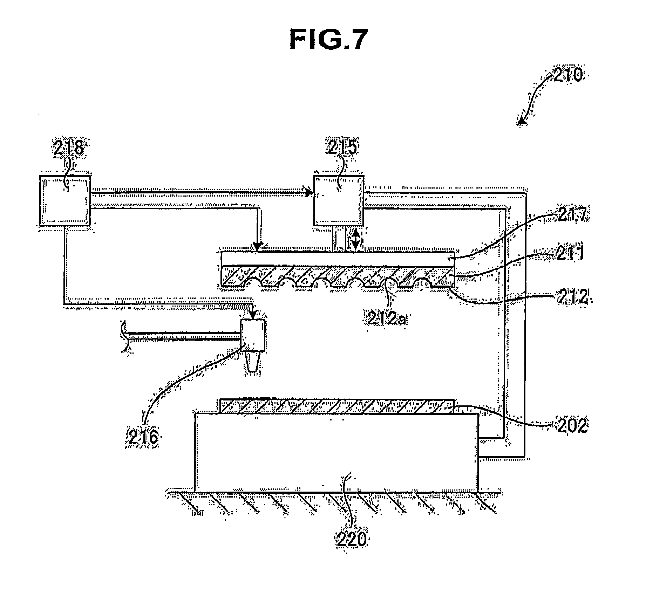

Fig. 7 shows an example of the manufacturing apparatus for manufacturing the above-mentioned wafer level lens array 200. Furthermore, the following description will be given under the assumption that a thermosetting resin is used as the resin material of the lens sections 201. The manufacturing apparatus 210 shown in Fig. 7 includes a mold 211, a mechanical section 215, a resin supply section 216, a heating section 217, and a control section 218.

The mold 211 has a transfer surface 212 fit to the surface of the wafer level lens array 200 including the lens surfaces 203 of the lens sections 201. The lens sections 201 of the wafer level lens array 200 shown in Figs. 6A and 6B are two-dimensionally arranged at a predetermined pitch, and the lens surfaces 203 of lens sections 201 are convex spherical surfaces. Hence, on the transfer surface 212 of the mold, the concave spherical surfaces 212a having shapes opposite to the lens surfaces 203 are two-dimensionally arranged at a pitch the same as that of the lens sections 201.

The mold 211 is disposed so that the transfer surface 212 is opposed to the surface of the substrate section 202 fixed on a base mount 220, and us supported by the mechanical section 215. The mechanical section 215 is configured to raise the mold 211 so as to widen or narrow the space between the transfer surface 212 of the mold 211 and the substrate section 202. The resin supply section 216 is configured to supply the resin material on the substrate section 202. The heating section 217 is configured to heat the mold 211 and supply a heat required for the curing to the resin material being in contact with the transfer surface 212 of the mold 211.

The control section 218 is configured to raise the mold 211 by driving the mechanical section 215 in response to the time, which elapses from the start of the curing of the resin material supplied onto the substrate section 202, and adjust the space between the transfer surface 212 of the mold 211 and the surface of the substrate section 202. Further, by controlling the operations of the resin supply section 216 and the heating section 217, the amount of the supplied resin material, the temperature of the mold 211, and the like are also adjusted.

A process of manufacturing the wafer level lens array 200 by using the manufacturing apparatus 210 configured as described above is described below.

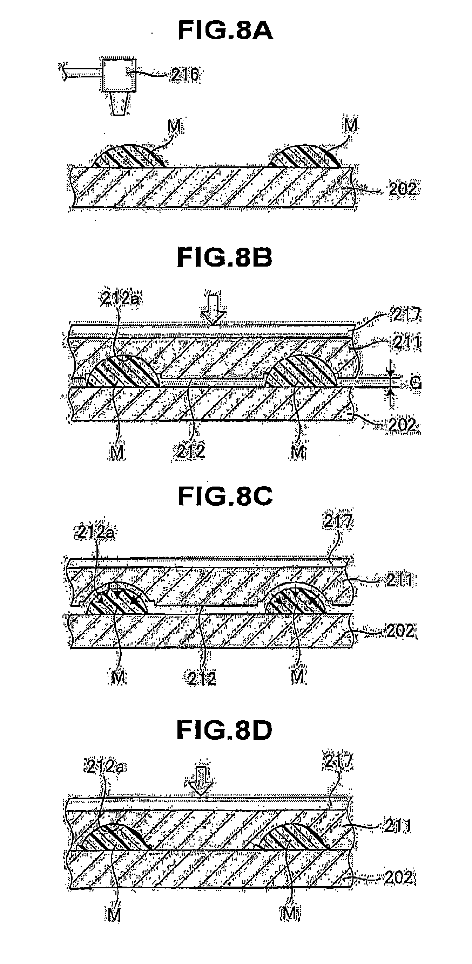

As shown in Fig. 8A, first, the resin supply section 216 supplies the resin material M to the respective portions, on which the lens sections 201 are disposed, on the substrate section 202. Then, as shown in Fig. 8B, the mold 211 is lowered, and the resin material M is sandwiched between the transfer surface 212 of the mold 211 and the surface of the substrate section 202. The resin material M comes into tight contact with the concave spherical surface 212a of the transfer surface 212, and the shape of the concave spherical surface 212a is transferred to the resin material M. At this time, a small gap G exists between the transfer surface 212 and the surface of the substrate section 202.

Then, the heating section 217 heats the mold 211, and supplies the heat to the resin material M being in contact with the concave spherical surface 212a of the transfer surface 212. Thereby, the resin material M is cured in a state where the shape of the concave spherical surface 212a is transferred. The resin material M, which is sandwiched between the concave spherical surface 212a and the surface of the substrate section 202, forms the lens sections 201, which have the lens surfaces 203 as the convex spherical surfaces, on the surface thereof.

As shown in Fig. 8C, in the process of the curing of the resin material M, the resin material M contracts, the contractile force of the resin material M acts in the direction of separating the resin material M from the concave spherical surface 212a of the transfer surface 212 of the mold 211 (in order to describe the direction of the action of the contractile force of the resin material M, Fig. 8C shows the state, in which the concave spherical surface 212a of the transfer surface 212 is separated from the resin material M, for convenience of description, but it is preferable that the concave spherical surface 212a of the transfer surface 212 should be kept in tight contact with the resin material M without the separation therebetween). The control section 218 stores the amount of change over time in thickness of the resin material M measured in advance. On the basis of the amount of temporal change, the control section 218 lowers the mold 211 by driving the mechanical section 215 in response to the time which elapses from the start of the curing of the resin material M, that is, the time which elapses from the start of the heating performed on the mold 211 by the heating section 217. According thereto, as shown in Fig. 8D, it is possible to narrow the space between the transfer surface 212 and the surface of the substrate section 202. In addition, the act is made to keep the concave spherical surface 212a in tight contact with the resin material M while changing the shape of the resin material M along the concave spherical surface 212a of the transfer surface 212. As described above, due to the contraction of the resin material M caused by the curing thereof, the concave spherical surface 212a is kept in tight contact with the resin material M, and the shape of the concave spherical surface 212a is accurately transferred. As a result, the lens sections 201 made of the resin material M are formed with high accuracy.

In the description of the above-mentioned example, the resin material M, which forms the lens sections 201 of the wafer level lens array 200 and substrate section 202, is a thermosetting resin, but may be photo-curable resin. Further, in the description, in order to keep the transfer surface 212 of the mold 211 in tight contact with the resin material M, the following configuration was adopted. On the basis of the amount of change over time in thickness of the resin material M measured in advance, the space between the transfer surface 212 of the mold 211 and the surface of the substrate section 202 is narrowed in response to the time which elapses from the start of the curing of the resin material M. However, instead of the above-mentioned configuration, the following configuration may be adopted. Similarly to the manufacturing apparatus 110 of the wafer level lens array 100 shown in Fig. 3, a pressure sensor, which detects the pressure applied to the transfer surface 212 of the mold 211 by the contact of the resin material, is provided. Then, in the process of the curing of the resin material M, the space between the transfer surface 212 of the mold 211 and the surface of the substrate section 202 is narrowed so that the pressure sensor detects the set pressure which is set in advance.

Further, in the manufacturing apparatus 110 of the wafer level lens array 100 shown in Fig. 3, in order to keep the transfer surface 112 of the first mold 111 and the transfer surface 114 of the second mold 113 in tight contact with the resin material M, the following configuration may be adopted. Similarly to the manufacturing apparatus 210 of the wafer level lens array 200 shown in Fig. 7, on the basis of the amount of change over time in thickness of the resin material M measured in advance, the space between the both transfer surfaces 112 and 114 is narrowed in response to the time which elapses from the start of the curing of the resin material M.

The molds 111, 113, and 211, which are used in the manufacturing apparatus 110 of the wafer level lens array 100 shown in Fig. 3 and the manufacturing apparatus 210 of the wafer level lens array 200 shown in Fig. 7, are formed by using masters having the same surface shapes as the wafer level lens arrays. For example, the molds formed by dipping the master into a nickel plating solution, and the nickel is extracted therefrom and is deposited on the surface of the master in the solution, that is, those are formed in the so-called electroforming method. Hereunder, the master will be described.

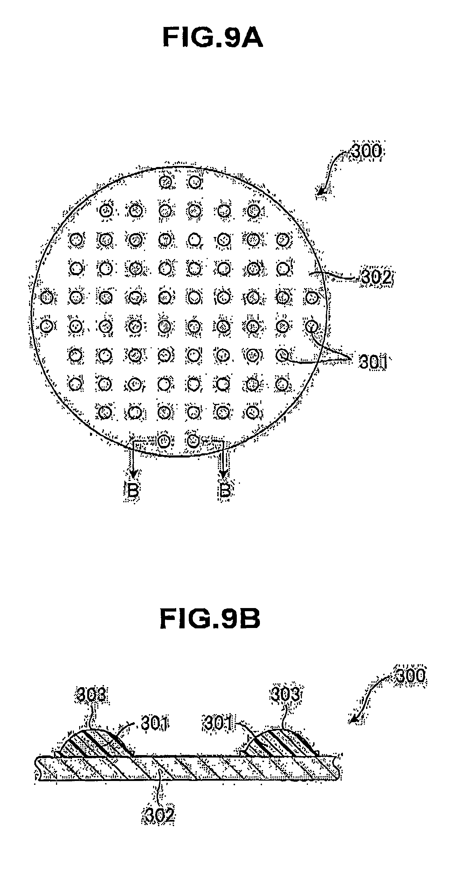

Figs. 9A and 9B show the master of the wafer level lens array as an example of the shaped article having a plurality of lens sections which is made of the resin material and are one-dimensionally or two-dimensionally arranged. The master 300 shown in Figs. 9A and 9B is a master of the wafer level lens array 200 shown in Fig. 6A and 6B. The mater 300 includes a substrate section 302 and a plurality of curved sections 301 which is two-dimensionally arranged at a predetermined pitch on a surface of the substrate section 302. The shape of the surface of the master 300 including the curved surfaces 303 corresponding to the surface of the curved section 301 is the same as the shape of the upper surface of the wafer level lens array 200 of Figs. 6A and 6B. That is, the curved surface 303 of each curved section 301 of the master 300 is formed as a convex spherical surface the same as the lens surface 203 of the lens section 201 of the wafer level lens array 200. The curved surface 303 of the curved section 301 of the master 300 corresponds to the lens surface 203 of the lens section 201 of the wafer level lens array 200. Therefore, hereinafter, the curved section 301 of the master 300 and the curved surface 303 thereof are respectively referred to as the lens section of the master 300 and the lens surface thereof.

The substrate section 302 is made of optical transparent ceramics such as transparent alumina, glass, or the like. The lens section 301 is made of a resin material, and is bonded to the surface of the substrate section 302. As the resin material of the lens section 301, for example, a thermosetting epoxy resin, a thermosetting acryl resin, a photo-curable epoxy resin, a photo-curable acryl resin, or the like is used. Furthermore, since the lens section 301 and the substrate section 302 of the master 300 does not function as optical elements, the resin material of the lens section 301 and the substrate section 302 of the master 300 may be not optically transparent.

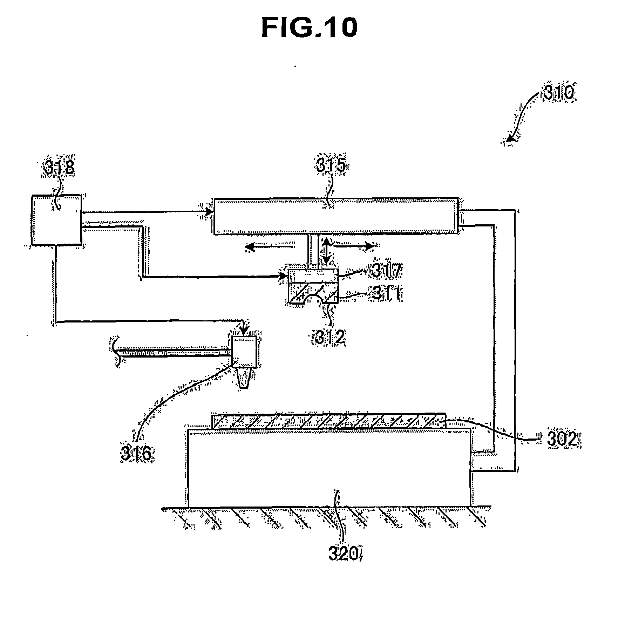

Fig. 10 shows an example of the manufacturing apparatus for manufacturing the master 300. Furthermore, the following description will be given under the assumption that a thermosetting resin is used as the resin material of the lens section 301. The manufacturing apparatus 310 shown in Fig. 10 includes a mold 311, a mechanical section 315, a resin supply section 316, a heating section 317, and a control section 318.

The mold 311 has a transfer surface fit to the lens surface 303 of the lens section 301 corresponding to a part of the plurality of lens section 301 of the master 300. In the example shown in the drawing, the mold 311 has a transfer surface 312 fit to the lens surface 303 of one lens section 301. The lens surface 303 of lens section 301 is a convex spherical surface. Hence, on the transfer surface 312, one concave spherical surface 312a having a shape opposite to the lens surface 303 is disposed. The transfer surface 312 is formed, for example, by performing a cutting process, a grinding process, and the like on the mold.

The mold 311 is disposed so that the transfer surface 312 is opposed to the surface of the substrate section 302 fixed on a base mount 320, and us supported by the mechanical section 315. The mechanical section 315 is configured to raise the mold 311 so as to widen or narrow the space between the transfer surface 312 of the mold 311 and the substrate section 302, and is configured to vertically and horizontally move the mold 311 at a predetermined pitch along the surface of the substrate section 302. The resin supply section 316 is configured to follow the mold 311, which is moved by the mechanical section 315, and supply the resin material to the portion, which is covered by the transfer surface 312 of the mold 311, on the substrate section 302. The heating section 317 is configured to heat the mold 311 and supply a heat required for the curing to the resin material being in contact with the transfer surface 312 of the mold 311.

The control section 318 is configured to raise the mold 311 by driving the mechanical section 315 in response to the time, which elapses from the start of the curing of the resin material, and adjust the space between the transfer surface 312 of the mold 311 and the surface of the substrate section 302. Further, by controlling the operations of the resin supply section 316 and the heating section 317, the amount of the supplied resin material, the temperature of the mold 311, and the like are also adjusted.

A process of manufacturing the master 300 by using the manufacturing apparatus 310 configured as described above is described below.

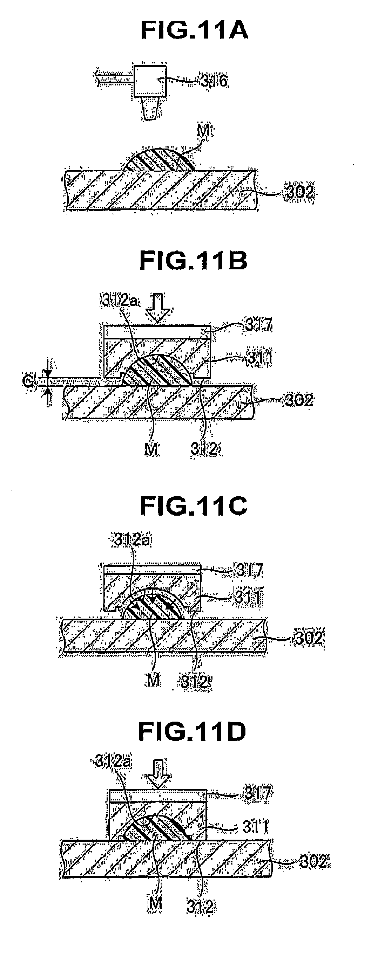

As shown in Fig. 11A, first, the resin supply section 316 supplies the resin material M onto the substrate section 302. Then, as shown in Fig. 11B, the mold 311 is lowered, and the resin material M is sandwiched between the transfer surface 312 of the mold 311 and the surface of the substrate section 302. The resin material M comes into tight contact with the concave spherical surface 312a of the transfer surface 312, and the shape of the concave spherical surface 312a is transferred to the resin material M. At this time, a small gap G exists between the transfer surface 312 and the surface of the substrate section 302.

Then, the heating section 317 heats the mold 311, and supplies the heat to the resin material M being in contact with the concave spherical surface 312a of the transfer surface 312. Thereby, the resin material M is cured in a state where the shape of the concave spherical surface 312a is transferred. The resin material M, which is sandwiched between the concave spherical surface 312a and the surface of the substrate section 302, forms the lens section 301, which has the lens surface 303 as the convex spherical surface, on the surface thereof.

As shown in Fig. 11C, in the process of the curing of the resin material M, the resin material M contracts, the contractile force of the resin material M acts in the direction of separating the resin material M from the concave spherical surface 312a of the transfer surface 312 of the mold 311 (in order to describe the direction of the action of the contractile force of the resin material M, Fig. 11C shows the state, in which the concave spherical surface 312a of the transfer surface 312 is separated from the resin material M, for convenience of description, but it is preferable that the concave spherical surface 312a of the transfer surface 312 should be kept in tight contact with the resin material M without the separation therebetween). The control section 318 stores the amount of change over time in thickness of the resin material M measured in advance. On the basis of the amount of temporal change, the control section 318 lowers the mold 311 by driving the mechanical section 315 in response to the time which elapses from the start of the curing of the resin material M. According thereto, as shown in Fig. 11D, it is possible to narrow the space between the transfer surface 312 and the surface of the substrate section 302. In addition, the act is made to keep the concave spherical surface 312a in tight contact with the resin material M while changing the shape of the resin material M along the concave spherical surface 312a of the transfer surface 312. As described above, due to the contraction of the resin material M caused by the curing thereof, the concave spherical surface 312a is kept in tight contact with the resin material M, and the shape of the concave spherical surface 312a is accurately transferred. As a result, the lens section 301 made of the resin material M is formed with high accuracy.

After the time required for the curing of the resin material M has elapsed, the control section 318 raises the mold 311 by driving the mechanical section 315, and vertically or horizontally moves the mold 311 at a predetermined pitch along the surface of the substrate section 302. Thereafter, the above-mentioned processes of supplying the resin material M, lowering the mold 311, and curing the resin material M are repeated. Then, the plurality of lens sections 301 is formed on the surface of the substrate section 302, and the master 300 is manufactured.

In the description of the above-mentioned example, the resin material M, which forms the lens section 301 of the master 300, is a thermosetting resin, but may be photo-curable resin. Further, in the description, in order to keep the transfer surface 312 of the mold 311 in tight contact with the resin material M, the following configuration was adopted. On the basis of the amount of change over time in thickness of the resin material M measured in advance, the space between the transfer surface 312 of the mold 311 and the surface of the substrate section 302 is narrowed in response to the time which elapses from the start of the curing of the resin material M. However, instead of the above-mentioned configuration, the following configuration may be adopted. Similarly to the manufacturing apparatus 110 of the wafer level lens array 100 shown in Fig. 3, a pressure sensor, which detects the pressure applied to the transfer surface 312 of the mold 311 by the contact of the resin material, is provided. Then, in the process of the curing of the resin material M, the space between the transfer surface 312 of the mold 311 and the surface of the substrate section 302 is narrowed so that the pressure sensor detects the set pressure which is set in advance.

As described above, according to the embodiment, there is provided the method of manufacturing the shaped article having the plurality of lens sections arranged one-dimensionally or two-dimensionally and the substrate section connecting the lens sections, the lens sections and the substrate section being integrally made of the resin material. The resin material is cured between the transfer surface of the first mold, which is fit to one side surface of the shaped article, and the transfer surface of the second mold which is fit to the opposite side surface of the shaped article. In addition, the space between the transfer surface of the first mold and the transfer surface of the second mold is narrowed in accordance with contraction of the resin material caused by the curing, and the transfer surface of the first mold and the transfer surface of the second mold are kept in tight contact with the resin material. By adopting the manufacturing method, in spite of the contraction of the resin material caused by the curing, the transfer surface of the mold and the resin material are kept in tight contact with each other, and the shape of the transfer surface of the mold is accurately transferred. As a result, it is possible to accurately form the lens sections made of the resin material.

Further, in the method of manufacturing the shaped article according to the embodiment, the pressure sensor, which detects the pressure applied to the transfer surface of the first mold or the transfer surface of the second mold, is provided. In addition, in the process of the curing of the resin material, the space between the transfer surface of the first mold and the transfer surface of the second mold is narrowed so that the pressure sensor detects the set pressure which is set in advance. By adopting the manufacturing method, the space between the transfer surface of the first mold and the transfer surface of the second mold is appropriately narrowed in accordance with contraction of the resin material caused by the curing. Thus, it is possible to keep both transfer surfaces in tight contact with the resin material.

Further, in the method of manufacturing the shaped article according to the embodiment, as the resin material becomes harder, the set pressure is set to increase. By adopting the manufacturing method, it is possible to transfer the shape of the transfer surface of the mold more accurately to the resin material which is gradually cured.

Further, in the method of manufacturing the shaped article according to the embodiment, the space between the transfer surface of the first mold and the transfer surface of the second mold is narrowed in response to the time, which elapses from start of the curing of the resin material, on the basis of the amount of change over time in thickness of the resin material measured in advance. By adopting the manufacturing method, the space between the transfer surface of the first mold and the transfer surface of the second mold is appropriately narrowed in accordance with contraction of the resin material caused by the curing. Thus, it is possible to keep both transfer surfaces in tight contact with the resin material.

Further, according to the another embodiment, the method of manufacturing the shaped article having the substrate section and the plurality of lens sections arranged one-dimensionally or two-dimensionally on the substrate section, the lens section being made of the resin material. The resin material is cured between the transfer surface of the mold, which is fit to the surface of the lens section, and the substrate section. In addition, the space between the transfer surface of the mold and the surface of the substrate section is narrowed in accordance with contraction of the resin material caused by the curing, and the transfer surface of the mold and the resin material are kept in tight contact with each other. By adopting the manufacturing method, in spite of the contraction of the resin material caused by the curing, the transfer surface of the mold and the resin material are kept in tight contact with each other, and the shape of the transfer surface of the mold is accurately transferred. As a result, it is possible to form the lens sections made of the resin material accurately.

Further, in the method of manufacturing the shaped article according to another embodiment, the pressure sensor, which detects the pressure applied to the transfer surface of the mold, is provided. In addition, in the process of the curing of the resin material, the space between the transfer surface of the mold and the surface of the substrate section is narrowed so that the pressure sensor detects the set pressure which is set in advance. By adopting the manufacturing method, the space between the transfer surface of the mold and the surface of the substrate section is appropriately narrowed in accordance with contraction of the resin material caused by the curing. Thus, it is possible to keep the transfer surface of the mold in tight contact with the resin material.

Further, in the method of manufacturing the shaped article according to another embodiment, as the resin material becomes harder, the set pressure is set to increase. By adopting the manufacturing method, it is possible to transfer the shape of the transfer surface of the mold more accurately to the resin material which is gradually cured.

Further, in the method of manufacturing the shaped article according to another embodiment, the space between the transfer surface of the mold and the surface of the substrate section is narrowed in response to the time, which elapses from start of the curing of the resin material, on the basis of the amount of change over time in thickness of the resin material measured in advance. By adopting the manufacturing method, the space between the transfer surface of the mold and the surface of the substrate section is appropriately narrowed in accordance with contraction of the resin material caused by the curing. Thus, it is possible to keep the transfer surface of the mold in tight contact with the resin material.

Further, according to the further embodiment, there is provided the apparatus for manufacturing the shaped article having the plurality of lens sections arranged one-dimensionally or two-dimensionally and the substrate section connecting the lens sections, the lens sections and the substrate section being integrally made of the resin material. The apparatus includes: the first mold that has the transfer surface fit to one side surface of the shaped article; the second mold that has the transfer surface fit to the opposite side surface of the shaped article; the mechanical section that relatively moves the first mold and the second mold so as to narrow the space between the transfer surface of the first mold and the transfer surface of the second mold; and the control section that drives the mechanical section in accordance with contraction of the resin material caused by the curing of the resin material cured between the transfer surface of the first mold and the transfer surface of the second mold. By using the manufacturing apparatus, in spite of the contraction of the resin material caused by the curing, the transfer surface of the mold and the resin material are kept in tight contact with each other, and the shape of the transfer surface of the mold is accurately transferred. As a result, it is possible to form the lens sections made of the resin material accurately.

Further, the apparatus for manufacturing the shaped article according to the further embodiment further includes the pressure sensor that detects the pressure applied to the transfer surface of the first mold or the transfer surface of the second mold. In the apparatus, the control section drives the mechanical section so as to make the pressure, which is detected by the pressure sensor in the process of the curing of the resin material, reach the set pressure which is set in advance. By using the manufacturing apparatus, the space between the transfer surface of the first mold and the transfer surface of the second mold is appropriately narrowed in accordance with contraction of the resin material caused by the curing. Thus, it is possible to keep both transfer surfaces in tight contact with the resin material.

Further, in the apparatus for manufacturing the shaped article according to the further embodiment, as the resin material becomes harder, the set pressure is set to increase. By using the manufacturing apparatus, it is possible to transfer the shape of the transfer surface of the mold more accurately to the resin material which is gradually cured.

Further, in the apparatus for manufacturing the shaped article according to the further embodiment, the control section drives the mechanical section in response to the time, which elapses from start of the curing of the resin material, on the basis of the amount of change over time in thickness of the resin material measured in advance. By using the manufacturing apparatus, the space between the transfer surface of the first mold and the transfer surface of the second mold is appropriately narrowed in accordance with contraction of the resin material caused by the curing. Thus, it is possible to keep both transfer surfaces in tight contact with the resin material.

Further, according to the still further embodiment, there is provided the apparatus for manufacturing the shaped article having the substrate section and the plurality of lens sections arranged one-dimensionally or two-dimensionally on the substrate section, the lens section being made of the resin material. The apparatus includes: the mold that has the transfer surface fit to the surface of the lens section and is disposed so as to face the transfer surface to the surface of the substrate section; the mechanical section that relatively moves the mold so as to narrow the space between the transfer surface of the mold and the surface of the substrate section; and the control section that drives the mechanical section in accordance with contraction of the resin material caused by the curing of the resin material cured between the transfer surface of the mold and the surface of the substrate section. By using the manufacturing apparatus, in spite of the contraction of the resin material caused by the curing, the transfer surface of the mold and the resin material are kept in tight contact with each other, and the shape of the transfer surface of the mold is accurately transferred. As a result, it is possible to accurately form the lens sections made of the resin material.

Further, the apparatus for manufacturing the shaped article according to the still further embodiment further includes the pressure sensor that detects the pressure applied to the transfer surface of the mold. In the apparatus, the control section drives the mechanical section so as to make the pressure, which is detected by the pressure sensor in the process of the curing of the resin material, reach the set pressure which is set in advance. By using the manufacturing apparatus, the space between the transfer surface of the mold and the surface of the substrate section is appropriately narrowed in accordance with contraction of the resin material caused by the curing. Thus, it is possible to keep the transfer surface of the mold in tight contact with the resin material.

Further, in the apparatus for manufacturing the shaped article according to the further embodiment, as the resin material becomes harder, the set pressure is set to increase. By using the manufacturing apparatus, it is possible to transfer the shape of the transfer surface of the mold more accurately to the resin material which is gradually cured.

Further, in the apparatus for manufacturing the shaped article according to the still further embodiment, the control section drives the mechanical section in response to the time, which elapses from start of the curing of the resin material, on the basis of the amount of change over time in thickness of the resin material measured in advance. By using the manufacturing apparatus, the space between the transfer surface of the mold and the surface of the substrate section is appropriately narrowed in accordance with contraction of the resin material caused by the curing. Thus, it is possible to keep the transfer surface of the mold in tight contact with the resin material.

## Claims

1. A method of manufacturing a shaped article having a plurality of lens sections arranged one-dimensionally or two-dimensionally and a substrate section connecting the lens sections, the lens sections and the substrate section being integrally made of a resin material,
wherein the resin material is cured between a transfer surface of a first mold, which is fit to one side surface of the shaped article, and a transfer surface of a second mold which is fit to an opposite side surface of the shaped article, and
wherein a space between the transfer surface of the first mold and the transfer surface of the second mold is narrowed in accordance with contraction of the resin material caused by the curing, and the transfer surface of the first mold and the transfer surface of the second mold are kept in tight contact with the resin material.

2. The method of manufacturing the shaped article according to the claim 1,
wherein a pressure sensor, which detects a pressure applied to the transfer surface of the first mold or the transfer surface of the second mold, is provided, and
wherein in the process of the curing of the resin material, the space between the transfer surface of the first mold and the transfer surface of the second mold is narrowed so that the pressure sensor detects a set pressure which is set in advance.

3. The method of manufacturing the shaped article according to claim 2, wherein as the resin material becomes harder, the set pressure is set to increase.

4. The method of manufacturing the shaped article according to claim 1, wherein the space between the transfer surface of the first mold and the transfer surface of the second mold is narrowed in response to time, which elapses from start of the curing of the resin material, on the basis of an amount of change over time in thickness of the resin material measured in advance.

5. A method of manufacturing the shaped article having a substrate section and a plurality of lens sections arranged one-dimensionally or two-dimensionally on a surface of the substrate section, the lens section being made of a resin material,
wherein the resin material is cured between a transfer surface of a mold, which is fit to a surface of the lens section, and the substrate section, and
wherein a space between the transfer surface of the mold and the surface of the substrate section is narrowed in accordance with contraction of the resin material caused by the curing, and the transfer surface of the mold and the resin material are kept in tight contact with each other.

6. The method of manufacturing the shaped article according to the claim 5,
wherein a pressure sensor, which detects a pressure applied to the transfer surface of the mold, is provided, and
wherein in the process of the curing of the resin material, the space between the transfer surface of the mold and the surface of the substrate section is narrowed so that the pressure sensor detects a set pressure which is set in advance.

7. The method of manufacturing the shaped article according to claim 6, wherein as the resin material becomes harder, the set pressure is set to increase.

8. The method of manufacturing the shaped article according to claim 7, wherein the space between the transfer surface of the mold and the surface of the substrate section is narrowed in response to time, which elapses from start of the curing of the resin material, on the basis of an amount of change in thickness over time of the resin material measured in advance.

9. An apparatus for manufacturing a shaped article having a plurality of lens sections arranged one-dimensionally or two-dimensionally and a substrate section connecting the lens sections, the lens sections and the substrate section being integrally made of a resin material, the apparatus comprising:
a first mold that has a transfer surface fit to one side surface of the shaped article;
a second mold that has a transfer surface fit to the opposite side surface of the shaped article;
a mechanical section that relatively moves the first mold and the second mold so as to narrow a space between the transfer surface of the first mold and the transfer surface of the second mold; and
a control section that drives the mechanical section in accordance with contraction of the resin material caused by the curing of the resin material cured between the transfer surface of the first mold and the transfer surface of the second mold.

10. The apparatus for manufacturing the shaped article according to the claim 9, further comprising
a pressure sensor that detects a pressure applied to the transfer surface of the first mold or the transfer surface of the second mold,
wherein the control section drives the mechanical section so as to provide a pressure, which is detected by the pressure sensor in the process of the curing of the resin material, reach a set pressure which is set in advance.

11. The apparatus for manufacturing the shaped article according to claim 10, wherein as the resin material becomes harder, the set pressure is set to increase.

12. The apparatus for manufacturing the shaped article according to claim 9, wherein the control section drives the mechanical section in response to the time, which elapses from start of the curing of the resin material, on the basis of the amount of change over time in the thickness of the resin material measured in advance.

13. An apparatus for manufacturing the shaped article having a substrate section and a plurality of lens sections arranged one-dimensionally or two-dimensionally on the substrate section, the lens section being made of a resin material, the apparatus comprising:
a mold that has a transfer surface fit to a surface of the lens section and is disposed so as to face the transfer surface to the surface of the substrate section;
a mechanical section that relatively moves the mold so as to narrow a space between the transfer surface of the mold and the surface of the substrate section; and
a control section that drives the mechanical section in accordance with contraction of the resin material caused by the curing of the resin material cured between the transfer surface of the mold and the surface of the substrate section.

14. The apparatus for manufacturing the shaped article according to the claim 13, further comprising
a pressure sensor that detects a pressure applied to the transfer surface of the mold,
wherein the control section drives the mechanical section so as to provide a pressure, which is detected by the pressure sensor in the process of the curing of the resin material, reach a set pressure which is set in advance.

15. The apparatus for manufacturing the shaped article according to claim 14, wherein as the resin material becomes harder, the set pressure is set to increase.

16. The apparatus for manufacturing the shaped article according to claim 13, wherein the control section drives the mechanical section in response to the time, which elapses from start of the curing of the resin material, on the basis of the amount of change over time in the thickness of the resin material measured in advance.
